## Europäisches Patentamt
## European Patent Office
## Office européen des brevets

(19)

(11) Numéro de publication: **0 099 800**
**B1**

(12) **FASCICULE DE BREVET EUROPEEN**

(45) Date de publication du fascicule du brevet:
**05.02.86**

(51) Int. Cl.⁴: **C 10 G 49/12,** B 01 J 8/22, C 10 G 49/00

(21) Numéro de dépôt: **83401374.0**

(22) Date de dépôt: **04.07.83**

(54) Procédé et dispositif d'hydrotraitement d'hydrocarbures en phase liquide, en présence d'un catalyseur en lit expansé ou bouillonnant.

(30) Priorité: **09.07.82 FR 8212239**

(43) Date de publication de la demande:
**01.02.84 Bulletin 84/5**

(45) Mention de la délivrance du brevet:
**05.02.86 Bulletin 86/6**

(84) Etats contractants désignés:
**BE DE GB IT NL**

(56) Documents cités:
**CH - A - 436 226**
**DE - A - 1 933 857**
**FR - A - 2 014 517**
**FR - A - 2 069 339**
**GB - A - 1 309 427**
**US - A - 3 309 305**
**US - A - 3 556 736**
**US - A - 3 761 393**

(73) Titulaire: **INSTITUT FRANCAIS DU PETROLE, 4, Avenue de Bois-Préau, F-92502 Rueil-Malmaison (FR)**

(72) Inventeur: **Bischoff, Didier, 14, rue d'Estienne d'Orves, F-92500 Rueil-Malmaison (FR)**
Inventeur: **Courteheuse, Gérard, 290, avenue Napoléon Bonaparte, F-92500 Rueil-Malmaison (FR)**
Inventeur: **Renard, Pierre, 8, allée des Romarins, F-78860 Saint-Nom-la-Bretèche (FR)**

LIBER, STOCKHOLM 1986

## 0 099 800

### Description

L'invention concerne, un procédé et des dispositifs de traitement ou hydrotraitement d'une charge fluide et plus particulièrement de démétallisation, de désulfuration, d'hydrotraitement et de conversion ou d'hydroconversion d'hydrocarbures.

L'invention est notamment applicable aux traitements catalytiques de charges liquides, telles que, par exemple, distillats issus des bruts pétroliers lourds, des résidus de la distillation d'hydrocarbures atmosphériques et sous vide, ces traitements étant effectués généralement en présence d'hydrogène et/ou de mélanges gazeux riches en hydrogène, sur un lit de catalyseur solide, le catalyseur étant utilisé sous forme de particules (catalyseur extrudé, grains de formes diverses, billes etc...).

Lors de tels traitements catalytiques, on constate une désactivation souvent rapide du catalyseur, dûe à la présence de poisons catalytiques, à la formation de coke, au dépôt de certains métaux... etc...

Cette désactivation nécessite le remplacement fréquent de tout ou partie du lit catalytique.

Dans le procédé de l'invention, le soutirage du catalyseur hors du réacteur est effectué généralement périodiquement ou parfois en continu, ou à l'issue du traitement de la charge.

Le type de lit catalytique adopté est celui d'un lit conventionnel dit lit bouillonnant ('ebullated-bed') appelé encore lit expansé, l'expansion des particules catalytiques étant obtenue par le cheminement ascendant de gaz et d'au moins un liquide qui est généralement la charge elle même.

Au delà de certaines vitesses superficielles du gaz et du liquide, le lit catalytique initialement au repos, devient expansé ou dispersé et le catalyseur, animé d'un mouvement permanent, circule plus ou moins vite au sein du réacteur. On opere dans le présent procédé de façon à obtenir une expansion d'environ 10 - 30 % et par exemple 15 % en volume par rapport au lit en repos. 11 est inutile de décrire davantage les caractéristiques des lits bouillonnants, celles-ci étant bien connues de l'homme de l'art. (Voir par exemple US-A- 2987465 ou encore US-A- 3761393).

Le procédé selon l'invention et les dispositifs selon l'invention conviennent également pour le soutirage de particules catalytiques de réacteurs de craquage, d'hydrocraquage, d'hydroréformage, de fabrication d'hydrocarbures aromatiques, d'isomérisation d'hydrocarbures paraffiniques, naphténiques ou aromatiques, les réaction diverses d'hydrogénation, de déshydrogénation, d'alkylation, de transalkylation, d'hydrodécyclisation, d'hydrodéalkylation, d'hydrotraitement, d'hydroviscoréduction etc ..., réacteurs où la charge liquide et les gaz qui y sont injectés, cheminent de bas en haut.

La charge fluide, qui est un mélange d'un liquide et d'un gaz, (contrairement aux techniques décriter par exemple dans les brevets francais FR-A– 2014517 et allemand DE-A 1933857 où le liquide et legaz sont introduits séparément), est introduite dans le réacteur, ou dans l'enceinte renfermant des particules catalytiques, par des organes de distribution situés à la partie inférieure du réacteur ou de l'enceinte et circule de bas en haut ('upflow') avant d'être évacuée, après le traitement de la charge, à la partie supérieure du réacteur (ou de l'enceinte que l'on désigne arbitrairement 'réacteur' dans la suite de la présente description).

On connait les inconvénients dûs à l'emploi d'une circulation descendante de la charge, (dans une technique de type lit mobile), cette dernière étant évacuée à la base du réacteur à travers une grille cylindrique disposée à la base du réacteur et qui soutient le lit catalytique. Un tel procédé présente l'inconvénient d'un risque d'encrassement de la grille par des grains de catalyseur poussés contre cette grille par la charge liquide évacuée par le fond du réacteur. Il peut alors en résulter une répartition irrégulière des fluides dans le catalyseur, avec.des risques de blocage de certaines zones de ce lit au moment de l'évacuation du catalyseur, ainsi qu'un accroissement de l'érosion du catalyseur dûe au frottement entre grains bloqués et grains libres du lit catalytique et entre les grains de catalyseur libres et la grille d'évacuation de la charge liquide.

Dans l'invention, on utilise une technique de lit bouillonnant qui permet d'améliorer la distribution, l'homogénéisation du lit catalytique et qui facilite le soutirage du catalyseur.

L'objet de l'invention fournit une technique qui supprime les inconvénients mentionnés ci-dessus tout en permettant d'assurer une expansion correcte du lit 'bouillonnant'. Cette technique consite à injecter le liquide et les gaz sous la paroi qui soutient le lit catalytioue, par une pluralité d'orifices répartis sur toute la section du réacteur, conformément à divers agencements qui font l'objet de l'invention.

Plus particulièrement, ce résultat est obtenu par un procédé dans lequel on soutire périodiquement des particules solides pulvérulentes d'un espace généralement fermé et on introduit dans le dit espace une charge fluide constituée d'un liquide et d'un gaz (généralement de l'hydrogène), le dit espace generalement fermé ayant sensiblement la forme d'un volume de révolution allongé et sensiblement vertical, les particules solides étant introduites à la partie supérieure de l'enceinte et soutirées périodiquement ou à la fin du traitement, dans la partie inférieure de l'enceinte (après avoir été utilisées sous la forme d'un lit expansé) tandis que la charge fluide est indroduite au moins en partie, et par exemple en continu, dans la partie inférieure de la dite enceinte et en est soutirée dans la partie supérieure après avoir cheminé de bas en haut dans la dite enceinte, procédé dans lequel les particules solides sont donc soutirées périodiquement a la partie inférieure de l'enceinte par au moins une ouverture de taille convenable pour l'évacuation des particules solides, pratiquée dans la paroi qui soutient le catalyseure dans la dite enceinte, laquelle paroi est sensiblement horizontale et sensiblement et régulièrement discontinue c'est à dire parsemée de plusieurs ouvertures régulièrement espacées ayant chacune une taille suffisamment petite pour empêcher les particules solides de passer au travers de la dite paroi mais suffisamment grande pour permettre le passage à travers ces ouvertures d'un courant ascendant de la charge fluide et de l'hydrogène, le procédé étant caractérisé en ce que la charge fluide (fluide mise le liquide-gaz) est

2

injectée dans la partie inférieure de la dite enceinte par au moins une zone de distribution de forme particulière propre à l invention et située en dessous de ladite paroi.

A titre d'exemple, un premier type de zone de distribution est généralement constitué d'une conduite principale qui est, par exemple, sensiblement horizontale ou verticale lorsqu'elle pénètre à l'intérieur du réacteur, la dite conduite formant éventuellement au moins un coude, son extrémité (ou embout) devenant ensuite sensiblement verticale sous la paroi qui soutient le lit catalytique. Cet embout se subdivise alors en une pluralité de branches (ou rayons) disposées (type distiibuteur torique et réseau de tubes) par exemple en étoile (avec au moins 3 branches ou rayons), chaque branche étant munie de plusieurs orifices judicieusement disposés (lace à la paroi ou à l'opposé ou sur les côtés de la branche) tout le long de la branche, et par lesquels le fluide est injecté en phase mixte en vue de produire les turbulences nécessaires à l'obtention du lit catalytique expanse.

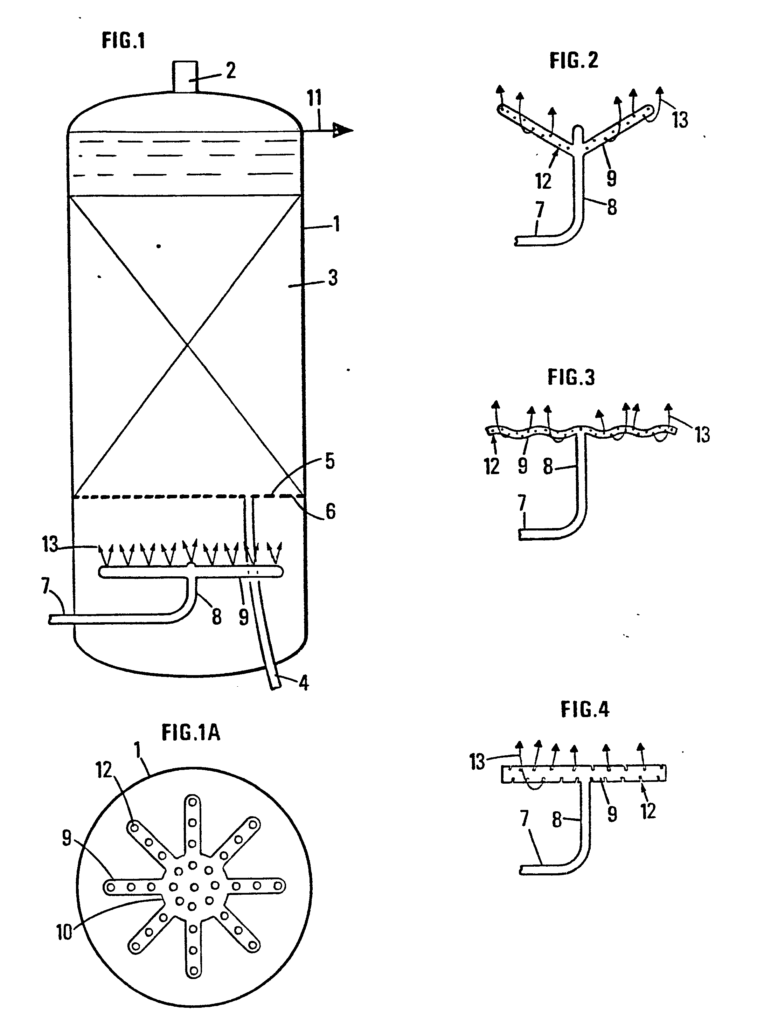

L'invention est illustrée d'abord par diverses flgures 1 à 4 : Les figures 1 et 1A montrent, en coupe axiale et en section droite respectivement un premier dispositif selon l'invention, avec un seul distributeur en forme dite étoilée.

Les figures 2 à 4 illustrent différents autres modes de réalisation des moyens d'introduction de la charge fluide dont le but est également d'obtenir la meilleure dispersion gazliquide.

Les flgures 1 et 1A représentent schématiquement un premier mode de réalisation d'un dispositif de traitement catalytique, en lit mobile bouillonnant.

Le réacteur 1 comporte à sa partie supérieure des moyens d'introduction de catalyseur frais (neuf ou régénéré) schematisés par le conduit 2 qui déverse les particules de catalyseur pour alimenter un lit de catalyseur 3.

Le catalyseur, périodiquement ou à l'issue de traitement, est évacué, par le conduit 4 schématisé, à la partie inférieure du reacteur 1. La ou les vannes nécessaires à cette évacuaticn ne sont pas représentées sur la figure. Le catalyseur, pendant les périodes du fonctionnement du réacteur est maintenu dans ce réacteur par une paroi, qui ici est une grille 5 conventionnelle (et qu'on appelle aroitrairement 'paroi' ou 'grille'). Les espaces ajourés, tels que 6, de la grille 5, laissent passer la charge liquide et les gaz injectès en dessous du niveau de la grille par une conduite telle que 7, mais ne laissent pas passer les particules de catalyseur.

La charge fluide est donc introduite à la partie inférieure du réacteur 1 par au moins une zone de distribution comprenant une rampe de distribution 7 (horizontale, oblique ou verticale ou disposée de toute façon adéquate, par exemple verticale dans certains réacteurs industriels) qui alimente au moins une canne verticale d'injection 8 d'où rayonnent des tubes 9 (ou des branches) disposés en étoile ainsi que le montre la flgure 1A, qui est une section droite du réacteur 1.

Sur la figure 1A, chaque branche 9 de l'étoile 10 est munie d'orifices 12 (trous ou fentes ou autres perforations du même type) pour l'injection de la charge fluide à l'intérieur de la zone de réaction.

La charge fluide constituée de deux phases (liquide et gaz) remonte dans le réacteur avant d'étre évacuée à la partie supérieure du réacteur par l'intermédiaire de moyens de collecte et d'évacuation schématisés par la conduite 11 sur la figure 1 ayant la forme, par exemple, d'un rateau constitué de tubes collecteurs raccordés à un conduit d'évacuation.

Dans le cas de la flgure 1, où le distributeur (ou les distributeurs, s'il y en a plusieurs) représenté sur la figure 1 par l'ensemble des agencements 7,8 et 9 a la forme d'une étoile sensiblement horizontale, les divers orifices tels que 12 (voir figure 1A) des diverses branches 9 sont judicieusement calibrés et répartis (en dessus, en dessous, en haut et sur les côtés de façon à assurer la meilleure dispersion du gaz et du liquide pour une large fourchette de débit.

On a représenté d'autres types de distributeurs perforés et utilisables dans la présente invention, sur les figures 2 et 3. Sur chacunes de ces 2 figures, on distingue une rampe 7, ici horizontale, au moins un emboût (ou canne) 8 vertical et les branches 9 de formes variées. Ces branches (dont l'inclinaison peut être par exemple comprise entre 0 et 40° par rapport à l'horizontale) représentent soit une étoile à branches inclinées dans la figure 2 (ou en forme de baleine de parapluie retourné) soit une étoile aux branches en forme ondulée dans la figure 3.

La figure 4, montre les positions possibles des orifices tels que 12 sur une branche 9 dans le but d'envoyer dans de multiples directions, (schématisées par les flèches 13 sur les flgures 1, 2, 3 et 4) les gouttelettes de fluide en vue de les faire pénétrer dans la masse catalytique de façon homogène en tout point de la surface de la grille 5, par les ouvertures 6 sur la figure 1.

Les étoiles des distributeurs peuvent comporter 3, 4, 5, 6, 7, 8 etc... ou plus, branches ou rayons.

Un autre perfectionnement du procédé se caractérisé ainsi :

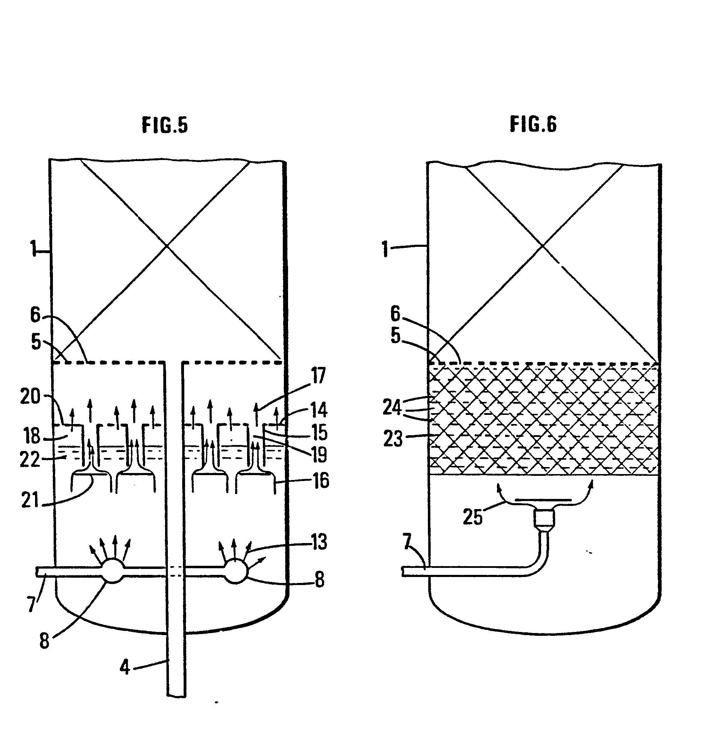

le fluide mixte injecté par une zone de distribution (étoilée ou non) se airige vers la paroi qui soutient le lit catalytique en rencontrant tout d'abord, avant de parvenir à cette paroi, un espace (18) (figure 5) dont la partie supérieure est munie d'orifices suffisamment grands pour laissser passer la majeure partie de la phase gazeuse du fluide mixte mais suffisamment petits pour empêcher le passage de la majeure partie de la phase liquide du fluide mixte, le dit espace étant traversé pardes parois verticales qui délimitent des ouvertures à travers le dit espace, de sorte que le fluide mixte, à l'intérieur du dit espace se divise d'une part en phase gazeuse et d'autre part en phase liquide, la majeure partie de la phase gazeuse atteignant la dite paroi à travers les dits orifices de la dite partie supéricure de l'espace, la majeure partie de la phase liquide atteignant la paroi après avoir cheminé à travers les dites ouvertures délimitées par les dites parois qui traversent le dit cspace, et après s'être à nouveau mélangée (au dessus des dits orifices de la dite partie supérieure de l'espace) avec la majeure partie de la phase gazeuse en vue de créer une turbulence adéquate à l'expansion du lit catalytique et d'assurer la

3

meilleure dispersion du gaz et du liquide pour une large fourchette de débit.

Le perfectionnement correspondant de l'appareillage est expliqué ci-dessous et permet d'obtenir une dispersion encore plus régulière du fluide pour une plus grande fourchette de débit à travers le lit catalytique tout en assurant un meilleur 'bouillonnement' du lit catalytique. Ce perfectionnement illustré par la figure 5, consiste à disposer, dans le réacteur 1, entre la grille 5, qui supporte le lit bouillonnant (soutirage du catalyseur par le conduit 4), et les rampes telles que 7, des zones de distribution de forme étoilée ou non, (que l'on a schématisées par les disques 8), une grille supplémentaire 14 (ou tout autre moyen équivalent) dont les perforations 20 sont suffisamment petites pour ne pas laisser passer la majeure partie de la phase liquide fluide (introduite par les zones de distribution 8), ne laissant passer ainsi que la majeure partie de la phase gazeuse du fluide. Des parois ou des barrières continues 15 (c'est à dire non perforées ou ajourées) et sensiblement verticales, sous forme de cheminées par exemple, sont disposées d'une façon généralement régulière sous cette grille 14 en prenant appui sur cette grille 14 (et dont les extrémités inférieures sont situées suffisamment bas dans le réacteur, généralement à un niveau supérieur à celui des zones de distribution (8) et délimitent ainsi un compartiment 18 et des cheminées 19 : la fraction gazeuse du fluide atteint en majeure partie (flèche 17) la grille 5 à travers le compartiment 18 et les orifices 20, après avoir traversé des zones 22 et 18 d'accumulation et de séparation d'une phase liquide et d'une phase, gazeuse. Des plateaux ou des chicanes 21 sont disposés sous les extrémités inférieures des cheminées 19 (et au dessus du niveau des boîtes ou zones de distribution) de façon à ce que le fluide mixte injecté par les zones de distribution 8 et dont le trajet est matérialisé par les flèches 13, s'accumule dans les compartiments 18 en créant des amas liquides et gazeux 22, la majeure partie du liquide s'engouffrant à travers les cheminées 19 (chemin matérialisé par les fléches 16). Le perfectionnement décrit ci dessus fait donc office de mixeur et de disperseur de la charge fluide.

Un autre perfectionnement du procédé et de l'appareillage conformes à l'invention, et faisant également office de mixeur de la charge fluide, est illustré par la figure 6. (Sur cette figure, on n'a pas représenté la conduite 4 de soutirage du catalyseur).

Ce procédé consiste à faire cheminer le fluide mixte, injecté par une zone de distribution de forme étoilée ou non, à travers une pluralité de couches alvéolées, juxtaposées les unes aux autres et disposées entre la ou les zones de distribution et la paroi sensiblement horizontale qui soutient le lit catalytique, en vue de provoquer l'expansion régulière et homogène du lit catalytique et d'assurer la meilleure dispersion du gaz et du liquide pour une large fourchette de débit.

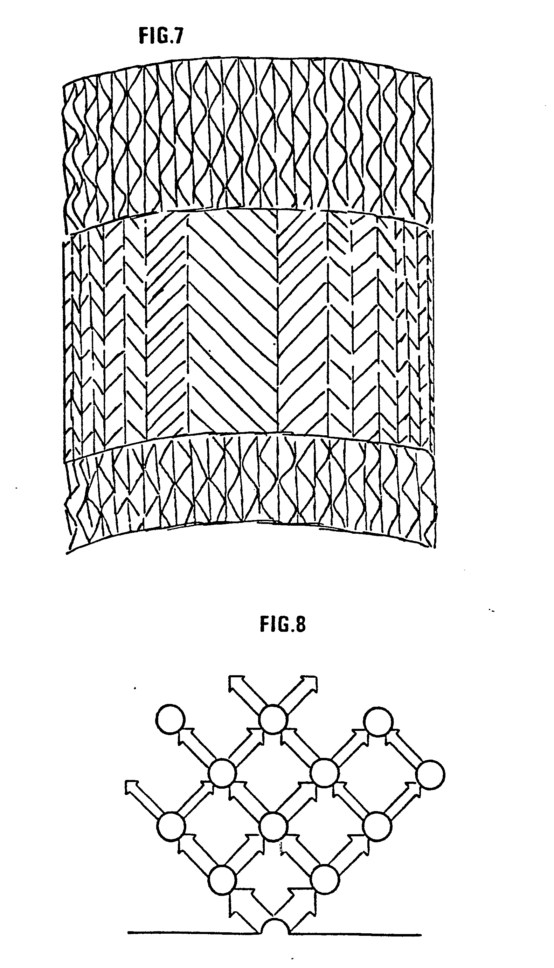

En se référant à la figure 6, on fait circuler le fluide injecté, dans le réacteur 1, vers la grille 5 et ses perforations 6, par une boîte de distribution 7, de forme étoilée ou non (et par exexple, dans la figure 6, de forme 'brise jet' c'est à dire une conduite d'injection à pluralité d'orifices surmontée d'une plaquette ou plateau qui brise le jet en pluie, comme l'indiquent les flèches 25) à travers les alvéoles d'une espèce de moule à gaufres 23, lui même constitué d'une série d'éléments 24 ayant la forme de plaques ou couches alvéolées de formes diverses (cylindriques ou carrées etc... par exemple) dépendant de la géométrie du réacteur et serrées les unes contre les autres. Généralement chaque élément a la forme d'une plaque rugueuse ou striée ou cannelée (mot anglais usuel: 'corrugations') comportant des nervures (comme le montre la figure 7); les plaques identiques ou différentes, sont agencées pour créer des cheminements complexes (illustrés par la figure 8) et continus depuis la partie inférieure jusqu'à la partie supérieure, permettant au fluide mixte d'émerger à la partie supérieure par une multitude d'orifices et d'accéder ainsi dans le lit catalytique, à travers la grille 5, en assurant un mixage correct de la charge gaz - liquide, donc un bon bouillonnement régulier du lit catalytique en tout point de ce lit. Dans chaque élément, ainsi que le montre la figure 8, chaque chemin ou trajet de fluide, se divise plusieurs fois en deux nouveaux chemins, chacun de ces nouveaux chemins se divisant à son tour en d'autres cheminements de fluide.

Les plaques, dont l'aspect général est visible sur la figure 7, sont fabriquées en un métal ou en un alliage ou en une matière plastique adéquats. On les trouve dans le commerce ('SU L ZER' (marque déposeé) par exemple).

Dans le procédé et les appareils conformcs à l'invention et décrits ci-dessus, il est également possible, en vue de contrôler l'exothermicité de la réaction dans le lit bouillonnant, d'effectuer des quenches (trempes ou refroidissements) en général à l'aide d'hydrogène froid et/ou à l'aide d'un liquide judicieusement choisi, (par exemple un liquide de même nature que la charge liquide), par exemple à l'entrée ou à la sortie de la zone de réaction mais également au milieu du lit catalytique lui même et dans ce dernier cas, il s'est avéré judicieux d'injecter le fluide utilisé pour réaliser un tel quench (hydrogène froid par exemple, ou liquide froid) à l'aide d'au moins une zone de distribution de forme étoilée du type décrit précédemment pour les figures 1 à 4 ou en forme de losanges ou de cylindres judicieusement espacés de façon à accroître la turbulence et donc l'efficacité du quench entre ces distributeurs en losanges ou cylindriques. On pourra utiliser aussi tout autre forme ne s'opposant pas au mouvement du catalyseur.

## Revendications

1.- Procédé pour effectuer, dans une zone de réaction, un hydrotraitement ou une hydroconversion ou une hydroviscoréduction d'une charge liquide d'hydrocarbures, en présence d'un gaz, ladite zone ayant sensiblement la forme d'un volume de révolution allongé et sensiblement vertical, des particules de catalyseur étant introduites à la partie supérieure de la zone de réaction et soutirées périodiquement ou à la fin du

**0 099 800**

traitement de la charge, dans la partie inférieure de la zone de réaction après avoir été utilisées sous la forme d'un lit bouillonnant, expansé ou dispersé pendant l'hydroconversion ou l'hydroviscoréduction ou l'hydrotraitement des hydrocarbures, procédé dans lequel les particules de catalyseur sont soutirées du lit par au moins une ouverture pratiquée dans une paroi soutenant le lit et sensiblement horizontale, ladite ouverture ayant la taille nécessaire à l'évacuation des particules de catalyseur, la paroi dans laquelle est pratiquée l'ouverture, étant sensiblement et régulièrement discontinue c'est-à-dire étant parsemée de plusieurs ouvertures régulièrement espacées dont la taille est suffisamment petite pour empêcher les particules de catalyseur de passer au travers de ladite paroi mais suffisamment grande pour permettre le passage à travers ces ouvertures, d'un courant ascendant d'un fluide mixte, défini ci-après, le procédé étant caractérisé en ce que la charge et le gaz sont introduits dans la zone de réaction sous la forme d'un fluide mixte, une partie au moins du fluide mixte étant injectée dans la partie inférieure de ladite zone de réaction par au moins une zone de distribution située en dessous de ladite paroi, chaque zone de distribution étant généralement constituée d'une conduite principale comportant au moins une extrémité située à l'intérieur de la zone de réaction, ladite extrémité de ladite conduite (à l'intérieur de la zone de réaction et sous ladite paroi) étant sensiblement verticale et se subdivisant en une pluralité de branches disposées en forme d'étoile, chaque branche étant munie de plusieurs orifices par lesquels est injectée une partie du fluide.

2.- Procédé pour effectuer dans une zone de réaction, un hydrotraitement ou une hydroconversion ou une hydroviscoréduction d'une charge liquide d'hydrocarbures, en présence d'un gaz, ladite zone ayant sensiblement la forme d'un volume de révolution allongé et sensiblement vertical, des particules de catalyseur étant introduites à la partie supérieure de la zone de réaction et soutirées periodiquement ou à la fin du traitement de la charge, dans la partie inférieure de la zone de réaction après avoir été utilisées sous la forme d'un lit bouillonnant expansé ou dispersé pendant l'hydroconversion ou l'hydroviscoréduction ou l'hydrotraitement des hydrocarbures, procédé dans lequel les particules de catalyseur sont soutirées du lit par au moins une ouverture pratiquée dans une paroi soutenant le lit et sensiblement horizontale, ladite ouverture ayant la taille nécessaire à l'évacuation des particules de catalyseur, la paroi dans laquelle est pratiquée l'ouverture, étant sensiblement et régulièrement discontinue, c'est-à-dire étant parsemée de plusieurs ouvertures régulièrement espacées dont la taille est suffisamment petite pour empêcher les particules de catalyseur de passer au travers de ladite paroi mais suffisamment grande pour permettre le passage à travers ces ouvertures, d'un courant ascendant d'un fluide mixte défini ci-après, le procédé étant caractérisé en ce que la charge et le gaz sont introduits dans la zone de réaction sous la forme d'un fluide mixte, une partie au moins du fluide mixte étant introduite dans la partie inférieure de ladite zone de réaction par au moins une zone de distribution située au dessous de ladite paroi puis se dirige vers ladite paroi qui soutient le lit catalytique en rencontrant tout d'abord, avant de parvenir à cette paroi, un espace dont la partie supérieure est munie d'orifices suffisamment grands pour laisser passer la majeure partie de la phase gazeuse du fluide mais suffisamment petits pour empêcher le passage de la majeure partie de la phase liquide du fluide, ledit espace-étant traversé par des parois verticales qui délimitent des ouvertures à travers ledit espace, de sorte que le fluide, à l'intérieur dudit espace, se divise d'une part en phase gazeuse et d'autre part en phase liquide, la majeure partie de la phase gazeuse atteignant ladite paroi à travers lesdits orifices de ladite paroi supérieure dudit espace, la majeure partie de la phase liquide atteignant la paroi après avoir cheminé entre lesdites parois qui délimitent ledit espace et après s'être à nouveau mélangée (au dessus desdits orifices de ladite partie supérieure dudit espace) avec la majeure partie de la phase gazeuse en vue de créer une dispersion et une turbulence favorables à l'expansion du lit catalytique.

3.- Procédé pour effectuer dans une zone de réaction, un hydrotraitement ou une hydroconversion ou une hydroviscoréduction d'une charge liquide d'hydrocarbures, en présence d'un gaz, ladite zone ayant sensiblement la forme d'un volume de révolution allongé et sensiblement vertical, des particules de catalyseur étant introduites à la partie supérieure de la zone de réaction et soutirées périodiquement ou à la fin du traitement de la charge, dans la partie inférieure de la zone de réaction après avoir été utilisées sous la forme d'un lit bouillonnant expansé ou dispersé pendant l'hydroconversion ou l'hydroviscoréduction ou l'hydrotraitement des hydrocarbures, procédé dans lequel les particules de catalyseur sont soutirées du lit par au moins une ouverture pratiquée dans une paroi soutenant le lit et sensiblement horizontale, ladite ouverture ayant la taille nécessaire à l'évacuation des particules de catalyseur, la paroi dans laquelle est pratiquée l'ouverture, étant sensiblement et régulièrement discontinue, c'est-à-dire étant parsemée de plusieurs ouvertures régulièrement espacées dont la taille est suffisamment petite pour empêcher les particules de catalyseur de passer au travers de ladite paroi mais suffisamment grande pour permettre le passage à travers ces ouvertures, d'un courant ascendant d'un fluide mixte défini ci-après, le procédé étant caractérisé en ce que la charge et le gaz sont introduits dans la zone de réaction sous la forme d'un fluide mixte, une partie au moins du fluide mixte étant introduite dans la partie inférieure de ladite zone de réaction par au moins une zone de distribution située au dessous de ladite paroi puis chemine à travers une pluralité de couches alvéolées juxtaposées les unes aux autres et disposées entre d'une part la ou les zones de distribution et d'autre part la paroi qui soutient le lit catalytique, afin de provoquer une expansion régulière et homogène du lit catalytique.

4.- Appareil pour mettre en oeuvre le procédé selon la revendication 1, comportant (figure 1) un réacteur (1), des moyens (2) d'introduction de catalyseur frais à la partie supérieure du réacteur, des moyens (4) d'evacuation du catalyseur use à la partie inférieure de ce réacteur, ces moyens d'evacuation comportant au moins un tube (4) de soutirage, suffisamment grand pour évacuer le catalyseur usé hors du réacteur, des moyens (7) d'introduction d'un fluide à la partie inférieure du réacteur et des moyens (11) d'evacuation du fluide à la partie

5

supérieure du réacteur, ledit tube (4) de soutirage étant aménagé à travers une paroi (ou grille) sensiblement horizontale (5) pourvue de perforations ou fentes (6) sensiblement réparties sur au moins une partie de la surface de cette paroi, la taille desdites perforations étant suffisamment petite pour empêcher le passage des particules de catalyseur à travers lesdites parois mais suffisamment grande pour permettre le passage à travers ladite paroi d'un courant asecndant du fluide, l'appareil étant caractérisé en ce qu'il comporte au moins une zone de distribution du fluide constituée d'un gaz et d'un liquide, disposée sous la paroi (5) ladite zone de distribution comportant une tubulure (7) qui après avoir pénétré à l'intérieur du réacteur se termine par au moins une extrémité, ladite extrémité (8), (ou embout), située sous ladite paroi, étant sensiblement verticale et éclatant en un faisceau d'au moins 3 branches (9) disposées en forme d'étoile, chaque branche étant munie de perforations ou de fentes réparties sur la longueur de la branche, par lesquelles est injecté ledit fluide.

5.- Appareil pour la mise en oeuvre du procédé selon la revendication 2, comportant un réacteur (1) (cf. figure n° 5), des moyens d'introduction de catalyseur frais à la partie supérieure du reacteur, des moyens d'évacuation du catalyseur usé à la partie inférieure de ce réacteur, ces moyens d'évacuation comportant au moins un tube (4) de soutirage suffisamment grand pour évacuer le catalyseur usé hors du réacteur, dea moyens d'introduction d'un fluide (constitué d'un liquide et d'un gaz) à la partie inférieure du réacteur, sous la paroi (5) définie ci-dessous, et des moyens d'évacuation du fluide à la partie supérieure du réacteur et une paroi (5) sensiblement horizontale disposée dans la partie inférieure du réacteur et pourvue de perforations (6) réparties sur la surface de cette paroi, la taille desdites perforations étant suffisamment petite pour empêcher le passage des particules de catalyseur à travers lesdites parois mais suffisamment grande pour permettre le passage à travers ladite paroi d'un courant ascendant dudit fluide, l'appareil étant caractérisé en ce qu'il comporte, disposés entre la paroi (5) et les moyens d'introduction du fluide, (a) une grille (14) dont les perforations (20) sont suffisamment petites pour empêcher le passage de la majeure partie de la phase liquide du fluide, ne laissant le passage qu'à la majeure partie de la phase gazeuse du fluide, (b) des parois ou des barrières (15) continues sensiblement verticales, disposées sous la grille (14) et qui prennent appui sur la grille (14) et dont les extrémités inférieures sont situées dans le réacteur à un niveau supérieur à celui des moyens d'introduction du fluide, ces barrières ou parois délimitant ainsi un compartiment (18) et des cheminées (19), et (c) des plateaux ou des chicanes (21) disposées sous les extrémités des cheminées.

6.- Appareil pour effectuer le procédé selon la revendication 3 comportant un réacteur (1) (figure n° 6), des moyens d'introduction de catalyseur frais à la partie supérieure du réacteur, des moyens d'évacuation du catalyseur usé à la partie inférieure de ce réacteur, ces moyens d'évacuation comportant au moins un tube de soutirage suffisamment grand pour évacuer le catalyseur usé hors du réacteur, des moyens d'introduction d'un fluide à la partie inférieure du réacteur, sous la paroi (5) définie ci-dessus, et des moyens d'évacuation dudit fluide à la partie supérieure du réacteur et une paroi (5) sensiblement horizontale disposée dans la partie inférieure du réacteur et pourvue de perforations (6) sensiblement réparties sur toute la surface de cette paroi, la taille desdites perforations étant suffisamment petite pour empêcher le passage des particules de catalyseur à travers lesdites parois mais suffisamment grande pour permettre le passage à travers ladite paroi d'un courant ascendant de fluide, l'appareil étant caractérisé en ce qu'il comporte, disposés entre la paroi (5) et les moyens d'introduction du fluide, plusieurs plaques (24) serrées les unes contre les autres, les plaques supérieures étant au voisinage immédiat de la paroi (5), chaque plaque ayant une forme rugueuse ou striée (c'est-à-dire alvéolée) de façon à ce que l'ensemble (23) desdites plaques constitue une multitude d'espaces alvéolés continus permettant un cheminement du fluide de bas en haut à travers l'ensemble des plaques.

**Patentansprüche**

1. Verfahren zur Durchführung - in einer Reaktionszone-einer Wasserstoffbehandlung oder einer Wasserstoffumwandlung oder einer Wasserstoffviskoreduktion einer flüssigen Kohlenwasserstoffcharge, in Anwesenheit eines Gases, wobei die Zone im wesentlichen die Form eines länglichen und im wesentlichen vertikalen Umdrehungsvolumens hat, wobei Katalysatorpartikel im oberen Teil der Reaktionszone eingeführt und periodisch oder am Ende der Behandlung der Charge im unteren Teil der Reaktionszone abgezogen werden, nachdem sie in Form eines expandierten oder dispergierten wallenden Bettes während der Wasserstoffumwandlung oder Wasserstoffviskoreduktion oder Wasserstoffbehandlung der Kohlenwasserstoffe verwendet wurden, wobei die Katalysatorpartikel vom 8ett über wenigstens eine Öffnung abgezogen werden, die in einer das Bett abstützenden Wand ausgespart und im wesentlichen horizontal ist, wobei die Öffnung die zum Abführen der Katalysatorpartikel notwendige Abmessung hat und die Wand, in der die Öffnung ausgespart ist, im wesentlichen und regelmäßig diskontinuierlich ist, d.h. mit mehreren unter regelmäßigem Abstand verteilten Öffnungen besetzt ist, deren Abmessung ausreichend klein ist, um die Katalysatorpartikel daran zu hindern, durch die Wand zu treten, jedoch ausreichend groß ist, um den Durchgang eines aufsteigenden Stroms eines unten definierten Mischfluids durch diese Öffnungen zu erlauben, dadurch gekennzeichnet, daß die Charge und das Gas in die Reaktionszone in Form eines Mischfluids eingeführt werden, wobei wenigstens ein Teil des Mischfluids in den unteren Teil der Reaktionszone über wenigstens eine Verteilerzone unterhalb dieser Wandung eingeblasen wird, wobei jede Verteilerzone im allgemeinen aus einer Hauptleitung mit wenigstens einem Ende besteht, das sich im Innern der Reaktionszone befindet, wobei das Ende dieser Leitung (im Innern der Reaktionszone und unter dieser Wand) im wesentlichen vertikal ist und sich in eine Vielzahl von Zweigleitungen sternförmiger Gestalt verteilt, wobei jede Zweigleitung mit mehreren Öffnungen versehen ist, über welche ein Teil des Fluids eingeblasen wird.

2. Verfahren zur Durchführung - in einer Reaktionszoneeiner Wasserstoffbehandlung oder einer Wasserstoffumwandlung oder einer Wasserstoffviskoreduktion einer flüssigen Kohlenwasserstoffcharge, in Anwensenheit eines Gases, wobei die Zone im wesentlichen die Form eines länglichen um im wesentlichen vertikalen Umdrehungsvolumens hat, wobei Katalysatorpartikel im oberen Teil der Reaktionszone eingeführt werden und periodisch oder am Ende der Behandlung der Charge im unteren Teil der Reaktionszone abgezogen werden, nachdem sie in Form eines expandierten oder dispergierten wallenden Bettes oder Siedebettes während der Wasserstoffumwandlung oder Wasserstoffviskoreduktion oder Wasserstoffbehandlung der Kohlenwasserstoffe verwendet wurden, wobei die Katalysatorpartikel aus dem Bett über wenigstens eine Öffnung abgezogen werden, die in einer das 8ett abstützenden Wandung ausgespart und im wesentlichen horizontal ist, wobei die Öffnung die zum Abziehen der Katalysatorpartikel notwendige Abmessung hat und in der Wandung die Öffnung ausgespart ist, welche im wesentlichen und regelmäßig diskontinuierlich ist, d.h. verteilt mehrere Öffnungen unter regelmäßigem Abstand trägt, deren Abmessung ausreichend klein ist, um zu verhindern, daß die Katalysatorpartikel durch diese Wand treten, jedoch ausreichend groß ist, um den Durchgang durch diese Offnungen eines aufsteigenden Stroms eines unten definierten Mischfluids zu ermöglichen, dadurch gekennzeichnet, daß die Charge und das Gas in die Reaktionszone in Form eines Mischfluids eingeführt werden, wobei wenigstens ein Teil des Mischfluids in den unteren Teil der Reaktionszone über wenigstens eine Verteilerzone eingeführt wird, die sich unterhalb dieser Wandung befindet, dann gegen diese Wand gerichtet wird, die das katalytische Bett abstützt, aber zunächst, bevor es zu dieser Wand gelangt, auf einen Raum trifft, dessen oberer Teil mit Öffnungen versehen ist, die ausrzichend groß sind, um den größeren Teil der gasförmigen Phase des Fluids durchzulassen, jedoch ausreichend klein sind, um den Durchgang des größeren Teils der flüssigen Phase des Fluids zu verhindern, wobei der Raum von vertikalen Wandungen durchsetzt ist, welche Offnungen quer über diesen Raum begrenzen, derart, daß das Fluid im Innern dieses Raumes sich einerseits in eine gasförmige Phase und andererseits in eine flüssige Phase teilt, wobei der größere Teil der gasförmigen Phase diese Wand über diese Öffnungen dieser oberen Wand dieses Raums erreicht und. der größere Teil der flüssigen Phase die Wand erreicht, nachdem er zwischen diesen Wandungen, welche diesen Raum begrenzen, durchgewandert ist und nachdem er von neuem (oberhalb der Öffnungen des oberen Teils dieses Raums) mit dem größeren Teil der gasförmigen Phase vermischt wurde, um eine Dispersion und eine Turbulenz zu erzeugen, welche günstig für die Expansion des katalytischen Bettes sind.

3. Verfahren zur Durchführung - in einer Reaktionszoneeiner Wasserstoffbehandlung oder einer Wasserstoffumwandlung oder einer Wasserstoffviskoredukton einer flüssigen Kohlenwasserstoffcharge in Anwesenheit eines Gases, wobei die Zone im wesentlichen die Form eines länglichen und im wesentlichen vertikalen Umdrehungsvolumens hat, Katalysatorpartikel im oberen Teil der Reaktionszone eingeführt und periodisch oder am Ende der Chargenbehandlung im unteren Teil der Reaktionszone abgezogen werden, nachdem sie in Form eines expandierten oder dispergierten wallenden Bettes oder Siedebettes während der Wasserstoffumwandlung oder Wasserstoffviskoreduktion oder Wasserstoffbehandlung der Kohlenwasserstoffe verwendet wurden, wobei die Katalysatorpartikel aus dem Bett über wenigstens eine Offnung abgezogen werden, die in einer das Bett abstützenden Wand ausgespart und im wesentlichen horizontal ist, wobei die Öffnung die zum Abziehen der Katalysatorpartikel notwendige Abmessung hat und in der Wand die Öffnung ausgespart ist, die im wesentlichen regelmäßig diskontinuierlich ist, d.h. mehrere unter regelmäßigem Abstand eingestreute Öffnungen aufweist, deren Abmessung ausreichend klein ist, um die Katalysatorpartikel daran zu hindern, durch diese Wand zu treten, jedoch ausreichend groß ist, um den Durchgang eines aufsteigenden Stroms eines weiter unten definierten Mischfluids durch diese Öffnungen zu ermöglichen, dadurch gekennzeichnet, daß die Charge und das Gas in die Reaktionszone in Form eines gemischten Strahls eingeführt werden, daß wenigstens ein Teil des gemischten Fluids in den unteren Teil dieser Reaktionszone über wenigstens eine Verteilerzone eingeführt wird, die sich unterhalb dieser Wandung befindet und dann quer durch eine Vielzahl von nebeneinander angeordneten zellenartigen Schichten, die einerseits zwischen der oder den Verteilerzonen und andererseits der das katalytische Bett tragenden Wandung wandert, derart, daß eine regelmäßige und homogene Expansion des katalytischen Bettes hervorgerufen wird.

4. Vorrichtung zur Durchführung des Verfahrens nach Anspruch 1 mit (Fig 1) einem Reaktor (1) Einrichtungen (2) zum Einführen frischen Katalysators am oberen Teil des Reaktors, Einrichtungen (4) zum Abziehen des benützten Katalysators im unteren Teil dieses Reaktors, Abführeinrichtungen mit wenigstens einem Abziehrohr (4), welches ausreichend groß ist, um den verwendeten Katalysator aus dem Reaktor zu entfernen, Einrichtungen (7) zum Einführen eines Fluids im unteren Teil des Reaktors und Einrichtungen (11) zum Abführen des Fluids im oberen Teil des Reaktors, wobei dieses Abziehrohr (4) quer durch eine im wesentlichen horizontale Wand (5) oder Gitter vorgesehen ist, wobei letztere mit Perforationen oder Schlitzen (6) versehen ist, die im wesentlichen über wenigstens einen Teil der Fläche dieser Wandung verteilt sind, wobei die Abmessung dieser Perforationen ausreichend klein ist, um den Durchgang der Katalysatorpartikel durch diese Wände zu verhindern, jedoch ausreichend groß ist, um den Durchgang durch diese Wandung eines aufsteigenden Fluidstroms zu ermöglichen, gekennzeichnet durch wenigstens eine Fluidverteilerzone bestehend aus einem Gas und einer Flüssigkeit, die unter der Wandung (5) angeordnet ist, wobei diese Verteilerzone einen Rohrstutzen (7) aufweist, der nach Eindringen in das Innere des Reaktors in wenigstens einem Ende endet, wobei dieses Ende (8) (oder dieses Ansatzstück)unter dieser Wandung im wesentlichen vertikal ist und in ein Bündel von wenigstens drei sternförmig angeordneten Zweigleitungen (9) auseinandergeht, wobei jede Zweigleitung mit Perforationen oder

0 099 800

Schlitzen versehen ist, die über die Länge der Zweigleitung verteilt sind und über die das Fluid eingeführt wird.

5. Vorrichtung zur Durchführung des Verfahrens nach Anspruch 2 mit einem Reaktor (1) (siehe Fig. 5), Einrichtungen zum Einführen des frischen Katalysators im oberen Teil des Reaktors, Einrichtungen zum Abführen des verbrauchten Katalysators am unteren Teil dieses Reaktors, wobei diese Abführeinrichtungen wenigstens ein Abziehrohr (4) umfassen ,das ausreichend groß ist, um den benützten Katalysator aus dem Reaktor abzuziehen, Einrichtungen zum Einführen eines Fluids (bestehend aus einer Flüssigkeit und einem Gas) im unteren Teil des Reaktors unter der unten definierten Wand (5) sowie Einrichtungen zum Abziehen des Fluids im oberen Teil des Reaktors sowie eine im wesentlichen horizontale Wand (5), die im unteren Teil des Reaktors angeordnet und mit über die Fläche dieser Wand verteilte Perforationen (6) versehen ist, wobei die Abmessung dieser Perforationen ausreichend klein ist, um den Durchgang der Katalysatorpartikel durch diese Wandungen zu verhindern, jedoch ausreichend groß ist, um den Durchgang durch diese Wand eines aufsteigenden Stroms des Fluids zu ermöglichen, gekennzeichnet durch zwischen Wand (5) und den Einführungseinrichtungen angeordnet: (a) ein Gitter (14), dessen Perforationen (20) ausreichend klein sind, um den Durchgang des größeren Teils der flüssigen Phase des Fluids zu verhindern, die einen Durchlaß nur im oberen Teil der gasförmigen Phase des Fluids zulassen; (b) kontinuierliche und im wesentlichen vertikale Wandungen oder Begrenzungen (15),die unter dem Gitter (14) angeordnet sind und sich auf dem Gitter (14) abstützen und deren untere Enden im Reaktor auf einem Niveau angeordnet sind, das höher als das der Fluideinführungseinrichtungen liegt, wobei diese Begrenzungen oder Wandungen so eine Kammer (18) sowie Kaminausbildungen (19) begrenzen und (c) Böden oder Schikanen (21), die unter den Enden der kaminartigen Ausbildungen angeordnet sind.

6. Vorrichtung zur Durchführung des Verfahrens nach Anspruch 3 mit einem Reaktor (1) (Fig. 6), Einrichtungen zum Einführen frischen Katalysators im oberen Teil des Reaktors, Einrichtungen zum Abführen des benützten Katalysators im unteren Teil dieses Reaktors, wobei diese Abführungseinrichtungen wenigstens ein ausreichend großes Abziehrohr umfassen, um den benützten Katalysator aus dem Reaktor abzuziehen, Einrichtungen zum Einführen eines Fluids im unteren Teil des Reaktors unter der oben definierten Wandung (5) sowie Einrichtungen zum Abziehen des Fluids im oberen Teil des Reaktors und eine im wesentlichen horizontale Wand (5), die im unteren Teil des Reaktors angeordnet und mit Perforationen (6) versehen ist, die im wesentlichen über die gesamte Fläche dieser Wandung verteilt sind, wobei die Abmessung dieser Perforationen ausreichend klein ist, um den Durchgang der Katalysatorpartikel durch diese Wandungen zu verhindern, jedoch ausreichend groß ist, um den Durchgang eines aufsteigenden Fluidstroms durch diese Wandung zu ermöglichen, dadurch gekennzeichnet, daß zwischen der Wandung (5) und den Fluideinführungseinrichtungen mehrere gegeneinander gepreßte Platten (24) vorgesehen sind, wobei die oberen Platten in unmittelbarer Nachbarschaft der Wand (5) angeordnet sind und jede Platte eine wellige oder profilgerippte (d.h. wabenförmige) Gestalt derart aufweist, daß diese Anordnung (23) aus diesen Platten eine Vielzahl zellenförmiger kontinuierlicher Räume bildet, die ein Wandern des Fluids durch die Gesamtheit der Platten von unten nach oben ermöglichen.

En

**Claims**

1.- Process for the hydrotreatment or hydrovisbreaking or hydroconversion of hydrocarbons, performed in a reaction zone, in the presence of a gas, said reaction zone having substantially the shape of an elongate, substantially vertical, revolution volume, catalyst particles being introduced at the upper part of the reaction zone and withdrawn, periodically or at the end of the charge treatment, from the lower part of the reaction zone after having been used as ebullated bed or expanded or dispersed bed during the hydroconversion or hydrovisbreaking or hydrotreatment of the hydrocarbons, process wherein the catalyst particles are withdrawn from the bed through at least one opening provided in the wall supporting the bed and substantially horizontal, said opening having a sufficient size for the discharge of the catalyst particles, the wall through which is made the opening being substantially and evenly discontinuous i.e. being provided with at least several scattered openings regularly spaced, whose size is sufficiently small to prevent the catalyst particles from passing through said wall, but sufficiently large to give passage through said openings to a mixed ascending fluid stream defined herebelow, the process being characterized in that the charge and the gas are introduced in the reaction zone as a mixed fluid, at least a portion of the mixed fluid being injected into the lower part of said reaction zone through at least one distribution zone located below said wall, each distribution zone being generally constituted of a main duct comprising at least one end inside the reaction zone, said end of said duct (inside the reaction zone and below said wall) being substantially vertical and being subdivided into a plurality of branches in star-shaped arrangement, each branch being provided with several orifices wherethrough in injected a portion of the fluid.

2.- A process for the hydrotreatment or hydrovisbreaking or hydroconversion of hydrocarbons, performed in a reaction zone, in the presence of a gas, said reaction zone having substantially the shape of an elongate, substantially vertical, revolution volume, catalyst particles being introduced at the upper part of the reaction zone and withdrawn, periodically or at the end of the charge treatment, from the lower part of the reaction zone after having been used as ebullated bed or expanded or dispersed bed during the hydroconversion or hydrovisbreaking or hydrotreatment of the hydrocarbons, process wherein the catalyst particles are withdrawn from the bed through at least one opening provided in the wall supporting the bed and substantially horizontal,

0 099 800

said opening having a sufficient size for the discharge of the catalyst particles, the wall through which is made the opening being substantially and evenly discontinuous i.e. being provided with at least several scattered openings regularly spaced, whose size is sufficiently small to prevent the catalyst particles from passing through said wall, but sufficiently large to give passage through said openings to a mixed ascending fluid stream defined herebelow, the process being characterized in that the charge and the gas are introduced in the reaction zone as a mixed fluid, at least a portion of the mixed fluid being injected into the lower part of said reaction zone through at least one distribution zone located below said wall, flows towards the wall which supports the catalyst bed and first encounters, before reaching said wall, a space whose upper part is provided with orifices of a sufficient size to give passage to the major part of the fluid gaseous phase but sufficiently small to prevent passage of the major part of the fluid liquid phase, said space being traversed by vertical walls which define openings through said space, so that the fluid inside said space is subdivided, on the one hand, into a gaseous phase and, on the other hand, into a liquid phase, the major part of the gaseous phase reaching said wall through said orifices of said upper wall of said space, the major part of the liquid phase reaching the wall after having progressed between said walls which define said space and after being again admixed (above said orifices of the upper part of said space) with the major part of the gaseous phase, so as to produce a dispersion and a turbulence convenient for the expansion of the catalyst bed.

3.- A process for the hydrotreatment of hydrovisbreaking or hydroconversion of hydrocarbons, performed in a reaction zone, in the presence of a gas, said reaction zone having substantially the shape of an elongate, substantially vertical, revolution volume, catalyst particles being introduced at the upper part of the reaction zone and withdrawn, periodically or at the end of the charge treatment, from the lower part of the reaction zone after having been used as ebullated bed or expanded or dispensed bed during the hydroconversion or hydrovisbreaking or hydrotreatment of the hydrocarbons, process wherein the catalyst particles are withdrawn form the bed through at least one opening provided in the wall supporting the bed and substantially horizontal, said opening having a sufficient size for the discharge of the catalyst particles, the wall through which is made the opening being substantially and evenly discontinuous i.e. being provided with at least several scattered openings regularly spaced, whose size is sufficiently small to prevent the catalyst particles form passing through said wall, but sufficiently large to give passage through said openings to a mixed ascending fluid stream defined herebelow, the process being characterized in that the charge and the gas are introduced in the reaction zone as a mixed fluid, at least a portion of the mixed fluid being injected into the lower part of said reaction zone through at least one distribution zone located below said wall, progresses through a plurality of stocked cellular layers, these cellular layers being located between, on the one hand, the one or more distribution zones and, on the other hand, the wall which supports the catalyst bed, so as to produce a steady and homogeneous expansion of the catalyst bed.

4.- Apparatus for carrying out the process according to claim 1, comprising (figure 1) a reactor (1), means (2) for introducing fresh catalyst at the upper part of the reactor, means (4) for discharging the used catalyst from the lower part of this reactor, said discharge means comprising at least one withdrawal tube (4) of sufficient size to discharge the used catalyst outside of the reactor, means (7) for introducing a fluid at the lower part of the reactor and means (11) for discharging the fluid from the upper part of the reactor, the said withdrawal tube (4) being arranged through a substantially horizontal wall (or grid) (5) provided with perforations or slots (6) substantially distributed over at least a portion of the surface of said wall, the size of said perforations being sufficiently small to prevent the passage of the catalyst particles through said walls but sufficiently large to give passage through said wall to an ascending fluid stream, the apparatus being characterised in that it contains at least one box for distributing the fluid, formed of a gas and a liquid, said box comprising pipe means (7) which, after having penetrated inside the reactor, terminates by at least one end portion, said end portion (8), located below said wall, being substantially vertical and extending in a bundle of at least three branches (9) arranged in star shape, each branch being provided with perforations or slots distributed over at least one portion of the branch length, wherethrough said fluid is injected.

5.- An apparatus, for carrying out the process according to claim 2, comprising a reactor (1) (see figure n°5), means for introducing fresh catalyst at the upper part of the reactor, means for discharging the used catalyst from the lower part of said reactor, said discharge means comprising at least one withdrawal tube (4) of sufficient size to discharge the used catalyst outside of the reactor, means for introducing a fluid (consisting of a liquid and a gas) at the lower part of the reactor and means for discharging fluid from the upper part of the reactor and a wall (5), substantially horizontal, located at the lower part of the reactor and provided with perforation (6) substantially distributed over at least the major part of the surface of said wall, the size of said perforations being sufficiently small to prevent passage of the catalyst particles through said wall, sufficiently large to give passage through said wall to an ascending cream of said fluid, the apparatus being characterized in that it comprises, arranged between the wall (5) and the means for introducing the fluid, (a) a grid (14) whose perforations (20) are sufficiently small to prevent passage of the major part of the fluid liquid phase, giving only passage to the major portion of the fluid gaseous phase, (b) substantially vertical continuous walls or barriers (15) which take their bearing on the grid (14) and whose lower ends are inside the reactor at a level above that of the means for introducing the fluid, said barriers or walls thus defining a compartment (18) and chimneys (19) and (c) plates or baffles (21) located below the ends of the chimneys.

6.- An apparatus, for carrying out the process according to claim (3), comprising a reactor (1) (figure N°6), means for introducing fresh catalyst at the upper part of the reactor, means for discharging used catalyst from the lower part of said reactor, said discharge means comprising at least one withdrawal tube of sufficient size to discharge used catalyst outside the reactor, means for introducing a fluid at the lower part of the reactor under a well (5) as defined hereinbelow, and means for discharging said fluid from the upper part of the reactor and a substantially horizontal wall (5) located at the lower part of the reactor and provided with perforations (6) substantially distributed over the whole surface of said wall, the size of said perforations being sufficiently small to prevent passage of the catalyst particles through said wall but sufficiently large to give passage through said wall to an ascending fluid stream, the apparatus being characterized in that in comprises, arranged between the wall (5) and the means for introducing the fluid, several plates (24) pressed against one another, the upper plates being in the immediate vicinity of said wall (5), each plate being rough or ribbed (i.e. cellular) so that the assembly (23) of said plates forms a multitude of cellular continuous spaces allowing an upward flow throuth the plates assembly.

0 099 800

FIG.1

FIG.2

FIG.3

FIG.4

FIG.1A

1

## FIG.5

## FIG.6

**FIG.7**

**FIG.8**